# EUROPÄISCHE PATENTSCHRIFT

(11) **EP 2 936 649 B1**
(45) Veröffentlichungstag und Bekanntmachung des Hinweises auf die Patenterteilung: **12.02.2020**
(21) Anmeldenummer: 13815469.5
(22) Anmeldetag: 18.12.2013
(51) Int. Cl.: B25F 5/00, H02J 7/02, B25H 3/00, H02J 7/00, H02J 50/10

(54) **INDUKTIONSLADEEINHEIT**
INDUCTION CHARGING UNIT
UNITÉ DE CHARGE PAR INDUCTION

(30) Priorität: 21.12.2012 DE 102012112846; 01.02.2013 DE 102013201706; 05.07.2013 DE 102013213192; 17.12.2013 DE 102013226231
(43) Veröffentlichungstag der Anmeldung: 28.10.2015
(73) Patentinhaber: Robert Bosch GmbH, 70442 Stuttgart (DE)
(72) Erfinder: REJMAN, Marcin, 71332 Waiblingen (DE); LOHR, Guenter, 70771 Leinfelden-Echterdingen (DE); BREITENBACH, Jan, 70569 Stuttgart (DE); MACK, Juergen, 73035 Goeppingen (DE); KRUPEZEVIC, Dragan, 70565 Stuttgart (DE)
(86) Internationale Anmeldenummer: PCT/EP2013/077167
(87) Internationale Veröffentlichungsnummer: WO 2014/096052

(56) Entgegenhaltungen:
- WO-A1-2006/012701
- WO-A1-2009/108959
- CN-A- 102 315 691
- US-A1- 2008 061 734
- US-A1- 2010 237 827
- US-A1- 2011 241 608

## Beschreibung

### Stand der Technik

Es sind bereits eine Induktionsladeeinheit nach dem Oberbegriff des Anspruchs 1 sowie ein Induktionsakkumulator nach dem Oberbegriff des Anspruchs 5 vorgeschlagen worden.

So geht aus der US 2008/0061734 A1 eine Handwerkzeuginduktionsladeeinheit zur induktiven Energieübertragung an einen Induktionsakkumulator im gekoppelten Zustand hervor. Die dortige Induktionsladeeinheit weist dazu eine Ladespule und ein Gehäuse auf, wobei das Gehäuse zumindest einen Aufnahmebereich zur Aufnahme des Induktionsakkumulators im gekoppelten Zustand umfasst und der Aufnahmebereich der Handwerkzeuginduktionsladeeinheit zumindest eine Vertiefung aufweist. Entsprechende Handwerkzeuginduktionsladeeinheiten sind auch aus der US 2011/0241608 A1, der CN 102 315 691 A, der WO 2009/108959 A1 und der US 2010/237827 A1 bekannt.

### Offenbarung der Erfindung

Gegenüber dem Stand der Technik wird vorgeschlagen, dass die zumindest eine Vertiefung des Aufnahmebereichs der Handwerkzeuginduktionsladeeinheit zumindest teilweise ein Positionierelement zur Positionierung des Induktionsakkumulators bildet, welches als ein Absatz mit einer Absatzhöhe aus einem Wertebereich von 0,5 mm bis 3 mm aufweisend eine runde Außenkontur für die Aufnahme des Induktionsakkumulators ausgebildet ist.

Unter einer "Induktionsladeeinheit" soll in diesem Zusammenhang insbesondere eine Einheit zur Aufladung des zumindest einen Induktionsakkumulators verstanden werden, die dazu vorgesehen ist, in zumindest einem Ladezustand einen Ladestrom zumindest teilweise durch elektromagnetische Induktion an den Induktionsakkumulator weiterzugeben und die die zumindest eine Ladespule umfasst. Unter einer "Ladespule" soll in diesem Zusammenhang insbesondere eine Spule mit zumindest einer Wicklung aus einem elektrisch leitenden Material verstanden werden, die dazu vorgesehen ist, in zumindest einem Ladezustand durch eine anliegende elektrische Energie, insbesondere durch eine Wechselspannung, ein Magnetfeld zu erzeugen, das in einer Induktivspule des Induktionsakkumulators einen elektrischen Wechselstrom erzeugt. Insbesondere ist die Ladespule dazu vorgesehen, ein elektromagnetisches Wechselfeld in einen elektrischen Wechselstrom umzuwandeln und/oder umgekehrt. Bevorzugt weist das Wechselfeld eine Frequenz von 10 - 500 kHz, besonders bevorzugt von 100 - 120 kHz, auf. Insbesondere ist die Richtung senkrecht zu der Spulenebene parallel zu einer Wicklungsachse der Ladespule ausgebildet. Bevorzugt umfasst die Induktionsladeeinheit zudem zumindest eine Spulenkerneinheit zu einer Erhöhung einer Induktivität der zumindest einen Ladespule.

Unter "vorgesehen" soll insbesondere speziell ausgestaltet, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "Induktionsakkumulator" soll in diesem Zusammenhang insbesondere eine Vorrichtung verstanden werden, die vorzugsweise eine wieder aufladbare Energiespeichereinheit umfasst, die zumindest teilweise dazu vorgesehen ist, eine Energie zu einer Erzeugung eines elektrischen Stroms elektrochemisch mittels einer reversiblen Reaktion zu speichern und durch Einleitung eines Ladestroms aufzuladen und die dazu vorgesehen ist, eine elektrische Maschine, insbesondere eine Handwerkzeugmaschine, mit Strom zu versorgen. Bevorzugt ist der Induktionsakkumulator in einem Aufnahmeraum der elektrischen Maschine, insbesondere der Handwerkzeugmaschine, aufgenommen oder lösbar befestigt. Der Induktionsakkumulator kann zumindest eine NiCd- oder NiMh- Akkuzelle aufweisen. Vorzugsweise weist der Induktionsakkumulator zumindest eine lithiumbasierte Akkuzelle auf. Unter einer "Handwerkzeugmaschine" soll in diesem Zusammenhang insbesondere ein durch einen Benutzer handgeführtes Elektrogerät, wie insbesondere eine Bohrmaschine, ein Bohrhammer, eine Säge, ein Hobel, ein Schrauber, eine Fräse, ein Schleifer, ein Winkelschleifer und/oder ein Multifunktionswerkzeug oder ein Gartengerät wie eine Hecken-, Strauch- und/oder Grasschere oder eine andere, einem Fachmann als sinnvoll erscheinende Ausgestaltung des Elektrogeräts verstanden werden.

Unter einer "Vertiefung" soll in diesem Zusammenhang insbesondere ein Bereich verstanden werden, der zumindest teilweise, vorzugsweise zumindest nahezu vollständig, in Normalenrichtung des Aufnahmebereichs von außen zu dem Aufnahmebereich hin betrachtet, nach einer sich direkt an den Aufnahmebereich anschließenden Oberfläche des Gehäuses angeordnet ist.

Unter einer "Absatzhöhe" soll in diesem Zusammenhang insbesondere ein Abstand, parallel zur Normalenrichtung des Aufnahmebereichs betrachtet, zwischen einem tiefsten Punkt der Vertiefung und einem höchsten Punkt der sich direkt an den Aufnahmebereich anschließenden Oberfläche des Gehäuses verstanden werden.

Durch die erfindungsgemäße Ausgestaltung der Induktionsladeeinheit kann eine konstruktiv einfache und robuste Aufnahme des Induktionsakkumulators erreicht werden. Dabei kann durch den Absatz mit seiner Absatzhöhe aus einem Wertebereich von 0,5 mm bis 3 mm eine vorteilhafte haptische Rückmeldung für einen Bediener bei einem Befestigen des Induktionsakkumulators an der Induktionsladeeinheit erreicht werden. Somit ist in einfacher Weise eine optimale Positionierung des Induktionsakkumulators relativ zu der Induktionsladeeinheit durch den Bediener mit einem bevorzugt hohen Bedienkomfort und einem vorteilhaft guten Ladeergebnis erreichbar.

Des Weiteren wird vorgeschlagen, dass die zumindest eine Vertiefung zumindest teilweise zumindest ein Schmutzabführelement bildet. Unter einem "Schmutzabführelement" soll in diesem Zusammenhang insbesondere ein Element verstanden werden, das zumindest teilweise dazu vorgesehen ist, Schmutz und/oder Staubpartikel aus dem Aufnahmebereich der Induktionsladeeinheit nach außen abzuführen. Dadurch kann auf konstruktiv einfache Weise vermieden werden, dass Schmutz und/oder Staubpartikel in einem gekoppelten Zustand zwischen dem Aufnahmebereich der Induktionsladeeinheit und dem Induktionsakkumulator angeordnet ist, wodurch ein Abstand zwischen dem Induktionsakkumulator und der Induktionsladeeinheit entstehen und eine direkte Kontaktierung des Induktionsakkumulators und der Induktionsladeeinheit verhindert werden würde.

Ferner wird vorgeschlagen, dass das zumindest eine Schmutzabführelement zumindest teilweise rinnenförmig ausgebildet ist. Unter "rinnenförmig" soll in diesem Zusammenhang insbesondere verstanden werden, dass das Schmutzabführelement drei Seitenwände aufweist, wobei die jeweils aneinander angrenzenden Seitenwände senkrecht zueinander stehen und wobei zwei der Seitenwände, die nicht direkt aneinander angrenzend angeordnet sind, parallel verlaufen. Dadurch kann eine konstruktiv einfache, vorteilhaft effektive und bevorzugt kostengünstige Ausgestaltung des zumindest einen Schmutzabführelements erreicht werden.

Die Erfindung betrifft zudem einen Induktionsakkumulator, insbesondere einen Handwerkzeuginduktionsakkumulator, mit zumindest einer Ladespule und mit einem Gehäuse, welches zumindest ein Positionierelement zur Kopplung des Induktionsakkumulators mit einem Aufnahmebereich einer Induktionsladeeinheit in einem gekoppelten Zustand aufweist. Es wird vorgeschlagen, dass das Positionierelement eine Ladeschnittstelle bildet und als Podest ausgebildet ist, welches sich über eine Außenfläche des angrenzenden Gehäuses des Induktionsakkumulators derart erhebt, dass das Positionierelement eine Absatzhöhe aus einem Wertebereich von 0,5 mm bis 3 mm aufweist.

Des Weiteren wird vorgeschlagen, dass die Außenkontur des Positionierelements quadratisch mit abgerundeten Ecken ausgebildet ist.

Entsprechend der erfindungsgemäßen Induktionsladeeinheit dann durch die erfindungsgemäße Ausgestaltung des Induktionsakkumulator eine konstruktiv einfache und robuste Aufnahme des Induktionsakkumulators in der Induktionsladeeinheit erreicht werden. In besonders vorteilhafter Weise ergibt sich für den Bediener eine haptische Rückmeldung bei einem Befestigen des Induktionsakkumulators an der Induktionsladeeinheit, wodurch in einfacher Weise eine optimale Positionierung des Induktionsakkumulators relativ zu der Induktionsladeeinheit mit einem bevorzugt hohen Bedienkomfort und einem vorteilhaft guten Ladeergebnis erreichbar ist.

Schließlich betrifft die Erfindung ein System mit zumindest einer erfindungsgemäßen Induktionsladeeinheit und mit zumindest einem erfindungsgemäßen Induktionsakkumulator, der mittels der Induktionsladeeinheit induktiv aufladbar ausgebildet ist.

Es wird vorgeschlagen, dass das Positionierelement der Induktionsladeeinheit und das Positionierelement des Induktionsakkumulators korrespondierend ausgebildet sind. Dabei entspricht ein Durchmesser des Positionierelements der Induktionsladeeinheit in besonders vorteilhafter Weise zumindest im Wesentlichen einer Diagonallänge des Positionierelements des Induktionsakkumulators.

Die erfindungsgemäße Induktionsladeeinheit, der erfindungsgemäße Induktionsakkumulator sowie das erfindungsgemäße System sollen hierbei nicht auf die oben beschriebene Anwendung und Ausführungsform beschränkt sein. Insbesondere können die erfindungsgemäße Induktionsladeeinheit, der erfindungsgemäße Induktionsakkumulator sowie das erfindungsgemäße System zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein System mit einer Induktionsladeeinheit einer erfindungsgemäßen Induktionsladevorrichtung und mit einem erfindungsgemäßen Induktionsakkumulator in einer perspektivischen Darstellung,
- Fig. 2a: die erfindungsgemäße Induktionsladevorrichtung mit der Induktionsladeeinheit und mit einer Befestigungseinheit in einer perspektivischen Darstellung,
- Fig. 2b: ein Befestigungselement der Befestigungseinheit der erfindungsgemäßen Induktionsladevorrichtung in einer perspektivischen Darstellung,
- Fig. 3a: die erfindungsgemäße Induktionsladevorrichtung in einer Frontansicht,
- Fig. 3b: die erfindungsgemäße Induktionsladevorrichtung in einem mit einer externen Einheit gekoppelten Zustand in einer Frontansicht,
- Fig. 4: eine Induktionsladevorrichtung mit einer Induktionsladeeinheit und mit einer alternativen Befestigungseinheit in einem mit einem Induktionsakkumulator gekoppelten Zustand,
- Fig. 5a: einen Befestigungsrahmen der alternativen Befestigungseinheit in einer Frontansicht,
- Fig. 5b: den Befestigungsrahmen der alternativen Befestigungseinheit in einer Rückansicht,
- Fig. 6a: ein Befestigungselement des Befestigungsrahmens der alternativen Befestigungseinheit in einer schematischen Schnittdarstellung und
- Fig. 6b: das Befestigungselement des Befestigungsrahmens der alternativen Befestigungseinheit in einem montierten Zustand des Befestigungsrahmens in einer schematischen Schnittdarstellung,
- Fig. 7a: eine schematische Darstellung des Befestigungselements des Befestigungsrahmens und einer Nut der Induktionsladeeinheit mit einer Rastausnehmung in einer alternativen Ausgestaltung,
- Fig. 7b: eine schematische Darstellung des Befestigungselements des Befestigungsrahmens und der Nut der Induktionsladeeinheit mit einer Rastausnehmung in der alternativen Ausgestaltung in einem montierten Zustand des Befestigungsrahmens,
- Fig. 8a: eine schematische Darstellung einer alternativen Profilvariante der Nut und der Lagernase in einer schematischen Schnittdarstellung,
- Fig. 8b: eine schematische Darstellung einer weiteren alternativen Profilvariante der Nut und der Lagernase in einer schematischen Schnittdarstellung,
- Fig. 8c: eine schematische Darstellung einer weiteren alternativen Profilvariante der Nut und der Lagernase in einer schematischen Schnittdarstellung,
- Fig. 9: eine schematische Darstellung eines alternativ ausgestalteten Systems mit einer einen Systemhalter umfassenden Befestigungseinheit, einer erfindungsgemäßen Induktionsladeeinheit und mit einem erfindungsgemäßen Induktionsakkumulator,
- Fig. 10: eine schematische Darstellung des Systemhalters der Befestigungseinheit mit der erfindungsgemäßen Induktionsladeeinheit in einer perspektivischen Ansicht,
- Fig. 11: eine schematische Darstellung des Systemhalters der Befestigungseinheit mit der erfindungsgemäßen Induktionsladeeinheit und mit dem erfindungsgemäßen Induktionsakkumulator in einer Vorderansicht,
- Fig. 12: eine schematische Darstellung des Systemhalters der Befestigungseinheit,
- Fig. 13: eine schematische Darstellung der erfindungsgemäßen Induktionsladeeinheit in einer perspektivischen Ansicht,
- Fig. 14: eine schematische Darstellung einer erfindungsgemäßen Ladeschnittstelle des Induktionsakkumulators in einer perspektivischen Ansicht,
- Fig. 15: eine schematische Darstellung des erfindungsgemäßen Induktionsakkumulators in einer Vorderansicht,
- Fig. 16: eine schematische Darstellung des erfindungsgemäßen Systems bei einer hängenden Lagerung mit einem eingesetzten Induktionsakkumulator in einer Seitenansicht,
- Fig. 17: eine schematische Darstellung des erfindungsgemäßen Systems bei einer hängenden Lagerung mit einer Handfräse mit einem eingesetzten Induktionsakkumulator in einer Seitenansicht,
- Fig. 18: eine schematische Darstellung des erfindungsgemäßen Systems bei einer hängenden Lagerung mit einem Bohrschrauber mit einem eingesetzten Induktionsakkumulator in einer Seitenansicht,
- Fig. 19: eine schematische Darstellung des erfindungsgemäßen Systems bei einer hängenden Lagerung mit einem Winkelschleifer mit einem eingesetzten Induktionsakkumulator in einer Seitenansicht,
- Fig. 20: eine schematische Darstellung des erfindungsgemäßen Systems bei einer hängenden Lagerung mit einer Stichsäge mit einem eingesetzten Induktionsakkumulator in einer Seitenansicht,
- Fig. 21: eine schematische Darstellung des erfindungsgemäßen Systems bei einer hängenden Lagerung mit einem Bohrhammer mit einem eingesetzten Induktionsakkumulator in einer Seitenansicht und
- Fig. 22: eine schematische Darstellung einer alternativen Nutzungsmöglichkeit der erfindungsgemäßen Induktionsladeeinheit mit dem erfindungsgemäßen Induktionsakkumulator ohne Verwendung des Systemhalters der Befestigungseinheit.

### Beschreibung der Ausführungsbeispiele

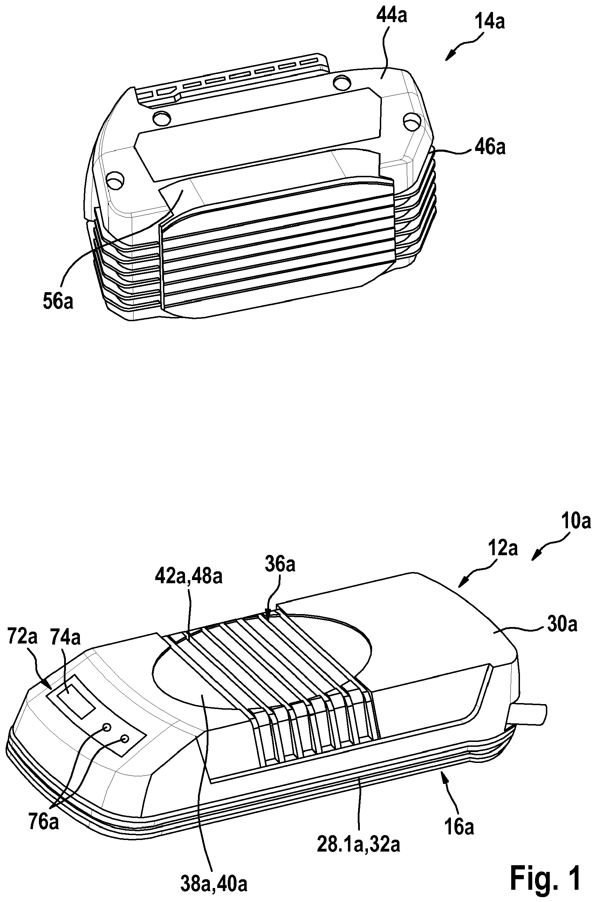

In Figur 1 ist ein System 90g mit einer erfindungsgemäßen Induktionsladeeinheit 12a und mit einem erfindungsgemäßen Induktivakkumulator 14a dargestellt. Die Induktionsladeeinheit 12a ist dazu vorgesehen, den Induktivakkumulator 14a in einem Ladezustand elektrisch aufzuladen. Der Induktionsakkumulator 14a ist als Handwerkzeuginduktionsakkumulator ausgebildet. Der Induktionsakkumulator 14a ist mittels der Induktionsladeeinheit 12a induktiv aufladbar ausgebildet. Der Induktionsakkumulator 14a ist mit der Induktionsladeeinheit 12a koppelbar ausgebildet. Die Induktionsladeeinheit 12a ist dazu vorgesehen, in einem mit dem Induktionsakkumulator 14a gekoppelten Zustand eine Energie auf den Induktionsakkumulator 14a zu übertragen. Die Induktionsladeeinheit 12a ist als Handwerkzeuginduktionseinheit ausgebildet. Die Induktionsladeeinheit 12a ist als Induktionsladegerät ausgebildet. Die Induktionsladeeinheit 12a weist eine nicht dargestellte Ladespule und ein Gehäuse 30a auf. Das Gehäuse 30a umschließt die Ladespule. Die Ladespule ist zu einer induktiven Energieübertragung in einem Ladezustand auf den Induktionsakkumulator 14a vorgesehen.

Das Gehäuse 30a der Induktionsladeeinheit 12a weist einen Aufnahmebereich 36a auf, der zur Aufnahme des Induktionsakkumulators 14a in einem gekoppelten Zustand vorgesehen ist. Der Aufnahmebereich 36a bildet eine Ladeschnittstelle 94a der Induktionsladeeinheit 12a, über die die elektrische Energie auf den Induktionsakkumulator 14a übertragen werden kann. Der Induktionsakkumulator 14a umfasst ebenfalls ein Gehäuse 44a, das ein Positionierelement 46a zur Kopplung des Induktionsakkumulators 14a mit dem Aufnahmebereich 36a des Gehäuses 30a der Induktionsladeeinheit 12a in einem gekoppelten Zustand aufweist. Das Positionierelement 46a des Induktionsakkumulators 14a ist als Podest, das sich über eine Außenfläche des angrenzenden Gehäuses 44a des Induktionsakkumulators 14a erhebt, ausgebildet. Es ist jedoch auch denkbar, dass das Positionierelement 40 der Induktionsladeeinheit als Podest und das Positionierelement 46 des Induktionsakkumulators als Vertiefung ausgebildet sind. Das als Podest ausgebildete Positionierelement 46a des Induktionsakkumulators 14a bildet eine Ladeschnittstelle 96a des Induktionsakkumulators 14a. Der Aufnahmebereich 36a des Gehäuses 30a der Induktionsladeeinheit 12a weist zumindest eine Vertiefung 38a auf. Die Vertiefung 38a weist eine Absatzhöhe von zumindest 0,5 mm auf. Der Aufnahmebereich 36a des Gehäuses 30a der Induktionsladeeinheit 12a weist mehrere Vertiefungen 38a auf. Die Vertiefung 38a bildet ein Positionierelement 40a zur Positionierung des Induktionsakkumulators 14a. Das Positionierelement 46a des Induktionsakkumulators 14a weist eine Absatzhöhe von zumindest 0,5 mm auf. Das Positionierelement 40a der Induktionsladeeinheit 12a und das Positionierelement 46a des Induktionsakkumulators 14a sind korrespondierend ausgebildet. Es ist jedoch auch denkbar, dass das Positionierelement 40a der Induktionsladeeinheit 12a als Podest und das Positionierelement 46a des Induktionsakkumulators 14a als Vertiefung ausgebildet sind.

Das Positionierelement 40a der Induktionsladeeinheit 12a und das Positionierelement 46 des Induktionsakkumulators 14a weisen jeweils eine Absatzhöhe von 3 mm auf. Es sind jedoch auch andere, einem Fachmann als sinnvoll erscheinende Maße denkbar. Das Positionierelement 40a der Induktionsladeeinheit 12a weist eine teilweise gekrümmte Außenkontur auf. Die Außenkontur des Positionierelements 40a der Induktionsladeeinheit 12a ist rund ausgebildet. Das Positionierelement 46a des Induktionsakkumulators 14a weist eine teilweise gekrümmte Außenkontur auf. Die Außenkontur des Positionierelements 46a des Induktionsakkumulators 14a ist quadratisch mit abgerundeten Ecken ausgebildet. Ein Durchmesser des Positionierelements 40a der Induktionsladeeinheit 12a entspricht zumindest nahezu einer Diagonallänge des Positionierelements 46a des Induktionsakkumulators 14a. Zwischen den Abmessungen des Positionierelements 40a der Induktionsladeeinheit 12a und des Positionierelements 46a des Induktionsakkumulators 14a ist eine geringe Toleranz vorgesehen. Die Tiefen sowie die Toleranzen der Positionierelemente 40a, 46a der Induktionsladeeinheit 12a und des Induktionsakkumulators 14a müssen für eine optimale Haptik für einen Bediener aufeinander abgestimmt sein. Alternativ ist es auch denkbar, dass die Außenkontur des Positionierelements 40a der Induktionsladeeinheit 12a quadratisch mit abgerundeten Ecken und die Außenkontur des Positionierelements 46a des Induktionsakkumulators 14a rund ausgebildet sind. Ferner ist es auch denkbar, dass die Außenkontur des Positionierelements 40a der Induktionsladeeinheit 12a oder des Positionierelements 46a des Induktionsakkumulators 14a eine andere, einem Fachmann als sinnvoll erscheinende geometrische Form, insbesondere mit abgerundeten Ecken, aufweist.

Der Aufnahmebereich 36a des Gehäuses 30a der Induktionsladeeinheit 12a weist zumindest eine weitere Vertiefung 48a auf. Die weitere Vertiefung 48a bildet ein Schmutzabführelement 42a. Der Aufnahmebereich 36a umfasst mehrere weitere als Schmutzabführelemente 42a ausgebildete Vertiefungen 48a. Die Vertiefungen 38a, 48a bilden eine Strukturierung eines Teils der Oberfläche des Gehäuses der Induktionsladeeinheit 12a. Die Schmutzabführelemente 42a sind rinnenförmig ausgebildet. Die Schmutzabführelemente 42a sind seitlich offen ausgebildet, sodass der Schmutz herausfallen kann. Die Schmutzabführelemente 42a sind zudem nach oben offen ausgebildet. Die Schmutzabführelemente 42a weisen einen rechteckigen Querschnitt auf. Die Schmutzabführelemente 42a weisen eine größere Absatzhöhe zu der Oberfläche des Gehäuses 30a der Induktionsladeeinheit 12a auf als das Positionierelement 40a. Parallel zur Oberfläche des Gehäuses 30a der Induktionsladeeinheit 12a betrachtet, umschließt die Außenkontur des Positionierelements 40a die Schmutzabführelemente 42a. In einem Ladezustand des Induktionsakkumulators können Staub und Schmutzpartikel, die sich innerhalb des Aufnahmebereichs 36a der Induktionsladeeinheit 12a ablagern, mittels der Schmutzabführelemente 42a abtransportiert werden. Die Schmutzabführelemente 42a weisen jeweils eine Absatzhöhe von 5 mm auf.

Ferner weist die Induktionsladeeinheit 12a eine Anzeigeneinheit 72a auf, die dazu vorgesehen ist, Informationen an einen Bediener auszugeben. Die Anzeigeneinheit 72a ist zu einer optischen Ausgabe von Informationen vorgesehen. In einem Ladezustand kann ein Bediener der Anzeigeneinheit 72a Informationen zu einem Ladezustand des Induktionsakkumulators 14a entnehmen. Die Anzeigeneinheit 72a umfasst ein Display 74a und mehrere LEDs 76a. Alternativ oder zusätzlich sind jedoch auch andere Ausgestaltungen der Anzeigeneinheit 72a denkbar. Die Anzeigeneinheit 72a ist an einer Vorderseite des Gehäuses 30a der Induktionsladeeinheit 12a angeordnet. Die Anzeigeneinheit 72a ist an der relativ zu einer Einschubrichtung abgeschrägt ausgebildeten Vorderseite des Gehäuses 30a der Induktionsladeeinheit 12a angeordnet. Dadurch kann eine Ablesbarkeit der Anzeigeneinheit 72a auch in einem beispielsweise in einer Werkbank eingeschobenen Zustand der Induktionsladeeinheit 12a erreicht werden.

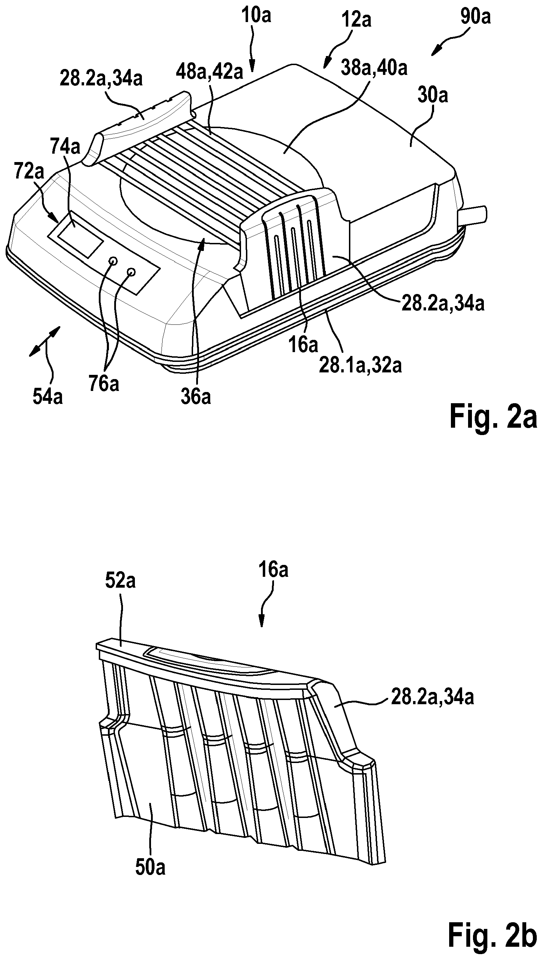

In Figur 2a ist eine Induktionsladevorrichtung 10a mit der Induktionsladeeinheit 12a und mit einer Befestigungseinheit 16a, die dazu vorgesehen ist, die Induktionsladeeinheit 12a in einem gekoppelten Zustand mit dem Induktionsakkumulator 14a zu koppeln, dargestellt. Die Befestigungseinheit 16a weist zumindest ein Befestigungselement 28.1a, 28.2a auf, das in einem gekoppelten Zustand fest an dem Gehäuse 30a der Induktionsladeeinheit 12a angeordnet ist. Die Befestigungseinheit 16a weist zwei Befestigungselemente 28.2a auf, die als Haltelasche 34a ausgebildet sind. Die Befestigungselemente 28.2a sind verliersicher an dem Gehäuse 30a der Induktionsladeeinheit 12a befestigt. Die Befestigungselemente 28.2a sind lösbar mit dem Gehäuse 30a der Induktionsladeeinheit 12a verbunden. Es ist jedoch auch denkbar, dass die Haltelaschen 34a fest und nicht lösbar mit dem Gehäuse 30a der Induktionsladeeinheit 12a verbunden ausgebildet sind. Die Befestigungselemente 28.2a sind auf sich gegenüberliegenden Seiten des Gehäuses 30a an der Induktionsladeeinheit 12a befestigt. Die Befestigungselemente 28.2a sind aus Kunststoff gebildet. Die Schmutzabführelemente 42a erstrecken sich zwischen den als Haltelaschen 34a ausgebildeten Befestigungselementen 28.2a.

Jedes Befestigungselement 28.2a weist einen ersten Bereich 50a auf, der sich in einem montierten Zustand parallel zu der Seite des Gehäuses 30a der Induktionsladeeinheit 12a erstreckt, an der das Befestigungselement 28.2a angeordnet ist. Jedes Befestigungselement 28.2a weist einen weiteren Bereich 52a auf, der sich senkrecht zu dem ersten Bereich 50a und parallel zu dem Aufnahmebereich 36a der Induktionsladeeinheit 12a erstreckt (Figur 2b). Zu einer Befestigung des Induktionsakkumulators 14a an der Induktionsladeeinheit 12a, an der die Befestigungselemente 28.2a der Befestigungseinheit 16a angebracht sind, wird der Induktionsakkumulator 14a in Einschubrichtung 54a auf die Induktionsladeeinheit 12a aufgeschoben. Dabei überdeckt das Positionierelement 46a des Induktionsakkumulators 14a das Positionierelement 40a der Induktionsladeeinheit 12a. Die Einschubrichtung 54a verläuft parallel zu einer Haupterstreckungsrichtung der Induktionsladeeinheit 12a. Bei einem Einschieben des Induktionsakkumulators 14a in die Befestigungseinheit 16a der Induktionsladevorrichtung 10a übergreifen die Befestigungselemente 28.2a der Befestigungseinheit 16a mit deren weiteren Bereichen 52a jeweils ein Halteelement 56a, das an das Gehäuse 44a des Induktionsakkumulators 14a angeformt ist. Die weiteren Bereiche 52a der Befestigungselemente 28.2a übergreifen die Halteelemente 56a des Induktionsakkumulators 14a quer zur Einschubrichtung 54a.

Das Positionierelement 46a des Induktionsakkumulators 14a kontaktiert bei einem Aufschieben des Induktionsakkumulators 14a eine Oberfläche des Gehäuses 30a der Induktionsladeeinheit 12a. Sobald der Induktionsakkumulator 14a so auf die Induktionsladeeinheit 12a aufgeschoben ist, dass das Positionierelement 46a des Induktionsakkumulators 14a über dem Aufnahmebereich 36a der Induktionsladeeinheit 12a angeordnet ist, rastet das Positionierelement 46a des Induktionsakkumulators 14a in das Positionierelement 40a der Induktionsladeeinheit 12a ein. Das Einrasten ist haptisch von einem Bediener wahrnehmbar und signalisiert dem Bediener eine für einen induktiven Ladevorgang optimale Positionierung des Induktionsakkumulators 14a relativ zu der Induktionsladeeinheit 12a. Die weiteren Bereiche 52a der Befestigungselemente 28.2a drücken dabei den Induktionsakkumulator 14a senkrecht zur Einschubrichtung 54a über die Halteelemente 56a zu der Induktionsladeeinheit 12a hin. Die Halteelemente 56a sind von Vorsprüngen gebildet. Durch die Positionierelemente 40a, 46a und die Befestigungselemente 28.2a ist der Induktionsakkumulator 14a formschlüssig und kraftschlüssig mit der Induktionsladeeinheit 12a gekoppelt.

Die als Haltelaschen 34a ausgebildeten Befestigungselemente 28.2a sind relativ zu dem Gehäuse 30a der Induktionsladeeinheit 12a federelastisch gelagert, sodass die Befestigungselemente 28.2a den Induktionsakkumulator 14a senkrecht zu dem Gehäuse 30a der Induktionsladeeinheit 12a hindrücken. Die als Haltelaschen 34a ausgebildeten Befestigungselemente 28.2a sind über eine nicht dargestellte zweifache Federung an dem Gehäuse 30a der Induktionsladeeinheit gelagert. Die als Haltelaschen 34a ausgebildeten Befestigungselemente 28.2a sind lösbar an dem Gehäuse 30a der Induktionsladeeinheit 12a befestigt. Die Befestigungselemente 28.2a sind gefedert gelagert, sodass bei einem Aufprall nach einem Sturz der Induktionsladeeinheit 12a die Befestigungselemente 28.2a vorzugsweise nicht abbrechen, sondern den Aufprall abfedern oder sich bevorzugt zerstörungsfrei von dem Gehäuse 3a0 der Induktionsladeeinheit 12a lösen.

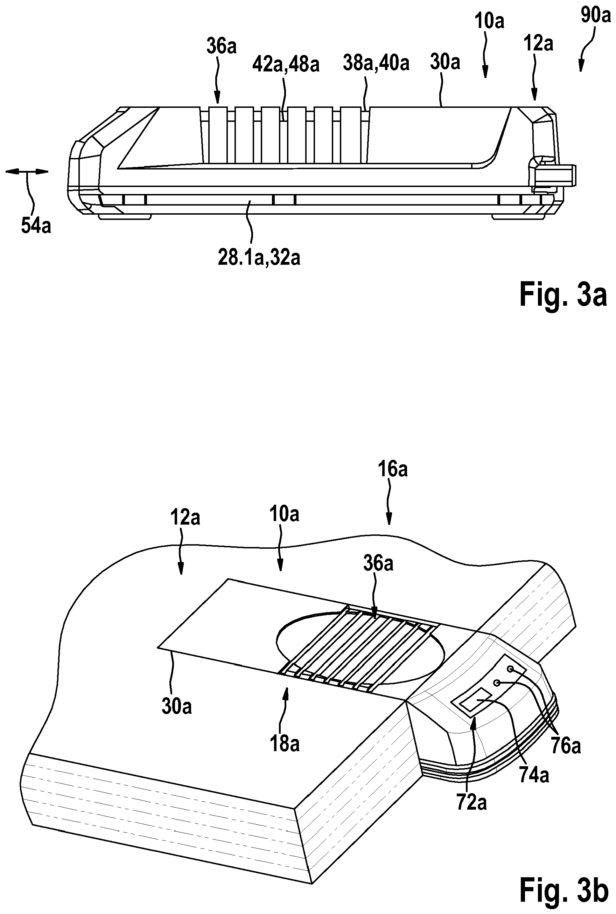

Die Befestigungseinheit 16a ist ferner dazu vorgesehen, die Induktionsladeeinheit 12a in einem Zustand mit zumindest einer externen Einheit 18a zu koppeln. Hierfür weist die Befestigungseinheit 16a ein weiteres Befestigungselement 28.1a auf, das an dem Gehäuse 30a der Induktionsladeeinheit 12a vorgesehen ist (Figur 3a). Das weitere Befestigungselement 28.1a ist als Nut 32a ausgebildet. Die Befestigungseinheit 16a weist zwei weitere Befestigungselemente 28.1a auf, die als Nut 32a ausgebildet sind. Die weiteren, als Nut 32a ausgebildeten Befestigungselemente 28.1a sind in das Gehäuse 30a der Induktionsladeeinheit 12a eingebracht. Die Nuten 32a sind auf sich gegenüberliegenden Seiten des Gehäuses 30a an der Induktionsladeeinheit 12a befestigt. Die Nuten 32a verlaufen parallel zur Haupterstreckungsrichtung der Induktionsladeeinheit 12a. Die Nuten 32a sind dazu vorgesehen, die Induktionsladeeinheit 12a in einem Aufnahmebereich der externen Einheit 18a, wie beispielsweise einer Werkbank, eines Werkzeugkoffers, eines Werkzeugkofferhalters, eines Werkzeugholsters und/oder einer anderen, einem Fachmann als sinnvoll erscheinenden externen Einheit, mittels einer Nut-Feder-Verbindung zu befestigen (Figur 3b). Die weiteren Befestigungselemente 28.1a können auch von einer Schwalbenschwanznut gebildet sein. Zudem können Rastelemente vorgesehen sein, die zu einer Verrastung in einem gekoppelten Zustand der Induktionsladeeinheit 12a mit der externen Einheit 18a vorgesehen sind.

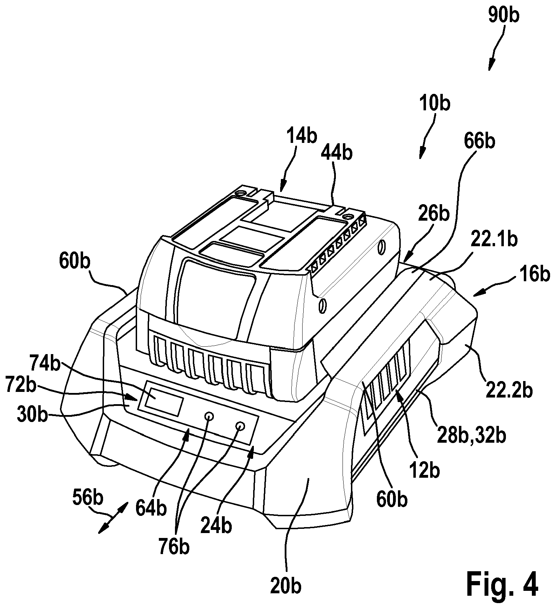

In den Figuren 4 bis 8c sind weitere Ausführungsbeispiele gezeigt, die jedoch nicht zur Erfindung gehören. Die nachfolgenden Beschreibungen und die Zeichnungen beschränken sich im Wesentlichen auf die Unterschiede zwischen den erfindungsgemäßen Ausführungsbeispielen gemäß der Figuren 1 bis 3b, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3b, verwiesen werden kann. Zur Unterscheidung sind den Bezugszeichen des erfindungsgemäßen Ausführungsbeispiels in den Figuren 1 bis 3b der Buchstabe a und den Bezugszeichen der nicht zur Erfindung gehörenden Beispiele in den Figuren 4 bis 8c die Buchstaben b bis f nachgestellt.

In Figur 4 ist eine Induktionsladevorrichtung 10b mit einer Induktionsladeeinheit 12b und mit einer Befestigungseinheit 16b dargestellt. Die Induktionsladeeinheit 12b entspricht der bereits beschriebenen Induktionsladeeinheit 12a. Die Befestigungseinheit 16b ist teilweise getrennt von der Induktionsladeeinheit 12b ausgebildet. Die Befestigungseinheit 16b weist einen Befestigungsrahmen 20b auf, der getrennt von der Induktionsladeeinheit 12b ausgebildet ist und der die Induktionsladeeinheit 12b in einem montierten Zustand zumindest teilweise umschließt. Der Befestigungsrahmen 20b umschließt die Induktionsladeeinheit 12b in einem montierten Zustand vollständig. Der Befestigungsrahmen 20b weist zwei, miteinander verbundene Rahmenelemente 22.1b, 22.2b auf. Die Rahmenelemente 22.1b, 22.2b sind formschlüssig miteinander verbunden. Die Rahmenelemente 22.1b, 22.2b sind miteinander verschraubt. Es sind jedoch auch andere, einem Fachmann als sinnvoll erscheinende Verbindungen zwischen den Rahmenelementen 22.1b, 22.2b denkbar. Grundsätzlich ist es auch vorstellbar, dass der Befestigungsrahmen 20b als ein einziges festes Bauteil ausgebildet ist. Der Befestigungsrahmen 20b ist aus einem Kunststoff gebildet. Der Befestigungsrahmen 20b ist zu einer Befestigung eines Induktionsakkumulators 14b während eines Ladezustands an der Induktionsladeeinheit 12b vorgesehen. Der Induktionsackumulator 14b entspricht dem bereits beschriebenen Induktionsakkumulator 14a.

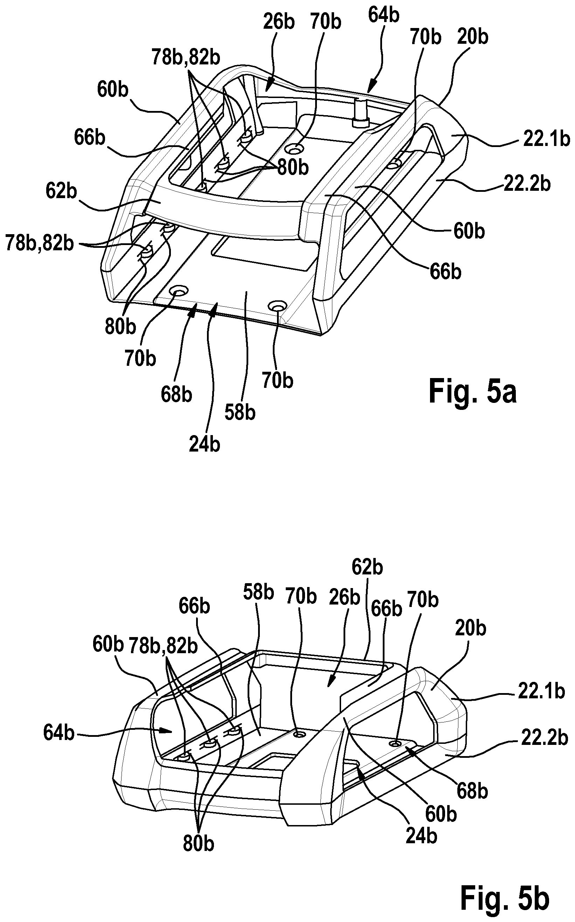

Der Befestigungsrahmen 20b weist eine von einem der Rahmenelemente 22.1b, 22.2b gebildete Auflage 58b auf, über die sich zwei Seitenbügel 60b und an einer Seite ein quer dazu verlaufender Haltebügel 62b erheben (Figuren 5a und 5b). Der Haltebügel 62b erstreckt sich dabei zwischen den Seitenbügeln 60b. Der Befestigungsrahmen 20b bildet einen Aufnahmebereich 24b zur Aufnahme der Induktionsladeeinheit 12. Die Induktivladeeinheit 12b wird auf die Auflage 58b aufgestellt und ist dann innerhalb des Befestigungsrahmens 20b angeordnet. Der Befestigungsrahmen 20b bildet einen Aufnahmebereich 26b zur Aufnahme des Induktionsakkumulators 14b. Gegenüber dem Haltebügel 62b ist eine als Einschuböffnung 64b ausgebildete Seite des Befestigungsrahmens 20b angeordnet, die zu einer Einschiebung des Induktionsakkumulators 14b in Formschlusselemente 66b und auf den Aufnahmebereich 36b der Induktionsladeeinheit 12b vorgesehen ist (Figur 4). Die Formschlusselemente 66b sind dazu vorgesehen, die Halteelemente 56b des Gehäuses 44b des Induktionsakkumulators 14b während des Ladezustands von oben zu umgreifen, sodass der Induktionsakkumulator 14b in einer Position auf dem Aufnahmebereich 36b der Induktionsladeeinheit 12b gesichert ist. Die Halteelemente 56b der Induktionsladeeinheit 12b sind zumindest teilweise mit dem Befestigungsrahmen 20b korrespondierend ausgebildet. Alternativ oder zusätzlich ist es auch denkbar, dass der Befestigungsrahmen 20b zehn Befestigungselemente 78b aufweist, die dazu vorgesehen sind, in die als Nuten 32b ausgebildete Befestigungselemente 28.1b einzugreifen. Figur 5a zeigt den Befestigungsrahmen 20b separat in einer Ansicht von vorne, in einer auf die Einschuböffnung 64b zugerichteten Sicht, und Figur 5b den Befestigungsrahmen 20b separat in einer Ansicht von hinten.

Der Befestigungsrahmen 20b weist einen Befestigungsbereich 68b auf, der dazu vorgesehen ist, den Befestigungsrahmen 20b beispielsweise an einer Werkbank oder an einem Werkzeugkoffer zu befestigen. Der Befestigungsbereich 68b ist an der Auflage 58b angeordnet. Der Befestigungsbereich 68b weist mehrere Befestigungsöffnungen 70b auf. Durch die Befestigungsöffnungen 70b kann der Befestigungsrahmen 20b mittels Schrauben festgeschraubt und somit befestigt werden. Es ist jedoch auch denkbar, den Befestigungsrahmen 20b auf eine andere, einem Fachmann als sinnvoll erscheinende Weise zu befestigen.

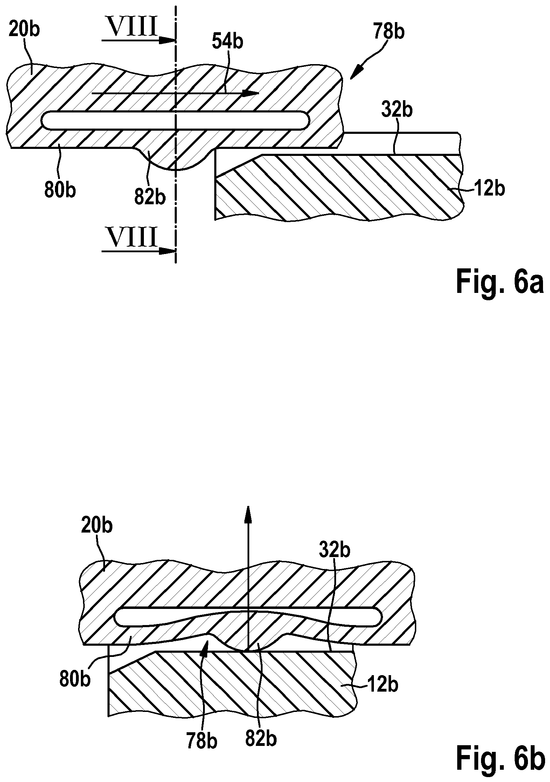

Die Befestigungselemente 78b des Befestigungsrahmens 20b weisen jeweils ein Federelement 80b und jeweils eine Lagernase 82b auf. Die Lagernasen 82b sind jeweils mittels der Federelemente 80b senkrecht zur Einschubrichtung 54b und parallel zu einer Einschubebene federnd angeordnet. Hierbei ist jede Lagernase 82b mittels des jeweiligen Federelements 80b entlang einer zumindest im Wesentlichen senkrecht zur Einschubebene verlaufenden Ebene beweglich gelagert. Während des Einschubvorgangs und in einem eingeschobenen Betriebszustand der Induktionsladeeinheit 12b in dem Befestigungsrahmen 20b übt ein Nutgrund der Nuten 32b zumindest eine Kraft auf die Lagernasen 82b aus, wodurch die Lagernasen 82b teilweise einfedern (Figuren 6a und 6b). Der Befestigungsrahmen 20b steht über die Lagernasen 82b mit den Nuten 32b der Induktionsladeeinheit 12b in Kontakt. Die zumindest eine Kraft lagert den Befestigungsrahmen 20b an der Induktionsladeeinheit 12b. Bis auf eine Einschubschräge mit einem Winkel von 45° gegenüber der Einschubrichtung 54b weisen die Nuten 32b entlang der Einschubrichtung 54b ein gleichbleibendes Nutprofil auf. Die Lagernasen 82b der Federelemente 80b des Befestigungsrahmens 20b können daher, bezogen auf die gezeigte Einschubrichtung 54b, beidseitig, das heißt "vorwärts" und "rückwärts", in die Nuten 32b der Induktionsladeeinheit 12b eingeschoben werden. Der Befestigungsrahmen 20b und die Induktionsladeeinheit 12b sind im eingeschobenen Betriebszustand durch eine Haftreibung zwischen den Lagernasen 82b und den Nuten 32b fixierbar. Zusätzlich können nicht näher dargestellte, einem Fachmann als sinnvoll erscheinende Rast-, Fixier- und/oder Anschlagmittel vorgesehen sein, um den Befestigungsrahmen 20b im eingeschobenen Betriebszustand zu sichern. Insgesamt sind, betrachtet entlang der Einschubrichtung 54b, zumindest zwei Befestigungselemente 78b hintereinander angeordnet. Insgesamt sind, betrachtet entlang der Einschubrichtung 54b, jeweils fünf Befestigungselemente 78b auf zwei sich gegenüberliegenden Seiten des Befestigungsrahmens 20b hintereinander angeordnet. Die Federelemente 80b sind als Stabfederelemente ausgebildet, an denen jeweils eine Lagernase 82b angeordnet ist. Die Federelemente 80b mit den Lagernasen 82b sind einstückig mit dem Befestigungsrahmen 20b ausgebildet. Die Lagernasen 82b sind entlang der Federelemente 80b durch einen Schlitz von dem restlichen Gehäuse des Befestigungsrahmens 20b getrennt und an den Enden des jeweiligen Federelements 80b mit diesem verbunden.

Die Lagernasen 82b weisen Gleitflächen auf, mit denen die Lagernasen 82b beim Einschubvorgang und im eingeschobenen Betriebszustand an Nuten 32 anliegen. In einem kraftlosen Zustand der Federelemente 80b ist ein größter Abstand der senkrecht zur Einschubrichtung 54b einander-gegenüberliegenden Gleitflächen größer als ein zur Einschubrichtung 54b senkrechter größter Abstand des Nutgrunds der beiden senkrecht zur Einschubrichtung 54b einander gegenüberliegend angeordneten Nuten 32b. Wird der Befestigungsrahmen 20b auf die Induktionsladeeinheit 12b aufgeschoben, federn daher die Federelemente 80b teilweise ein, sodass die Nuten 32b auf die Lagernasen 82b jeweils die Kraft ausüben. Der Befestigungsrahmen 20b stützt sich mit den Lagernasen 82b an den Nuten 32b der Induktionsladeeinheit 12b ab. Verschmutzungen und/oder Toleranzen der Nuten 32b oder der Lagernasen 82b können durch Ein- und/oder Ausfedern der Lagernasen 82b ausgeglichen werden, sodass ein Verklemmen und/oder ein übermäßiger Verschleiß der Lagernasen 82b und/oder Nuten 32b vermieden werden kann. Aufgrund der Kräfte ist der Befestigungsrahmen 20b in einem montierten Zustand spielfrei an der Induktionsladeeinheit 12b gelagert. Der Befestigungsrahmen 20b positioniert sich gegenüber der Induktionsladeeinheit 12b so, dass bezüglich der auf die Lagernasen 82b wirkenden Kräfte ein Kräftegleichgewicht besteht. Alternativ oder zusätzlich ist es auch denkbar, dass der Befestigungsrahmen 20b zumindest eine Nut und die Induktionsladeeinheit 12b zumindest ein Befestigungselement mit einem Federelement und einer Lagernase aufweist.

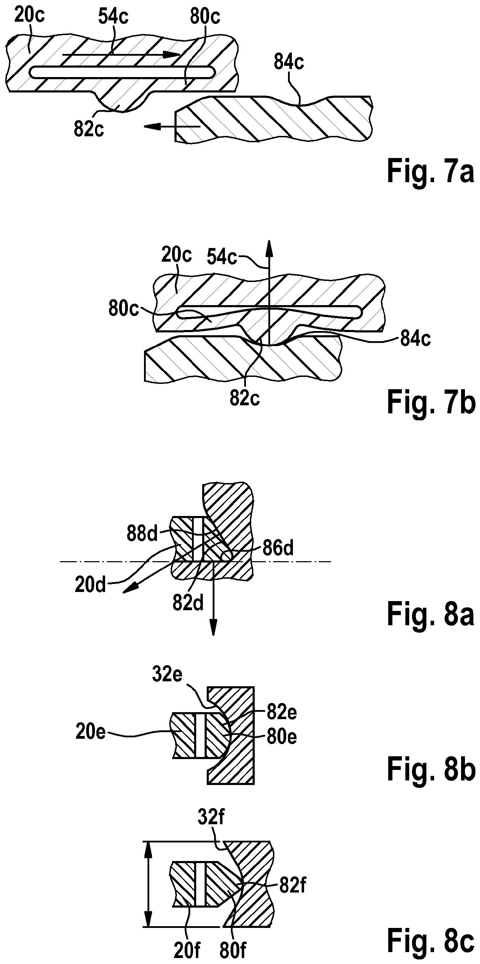

In den Figuren 7a und 7b sowie 8a, 8b und 8c sind weitere denkbare Ausgestaltungen der Nuten 32c, 32d, 32e, 32f und der Befestigungselemente 78c, 78d, 78e, 78f mit Federelement 80c, 80d, 80e, 80f und Lagernase 82c, 82d, 82e, 82f dargestellt.

Die in den Figuren 7a und 7b dargestellte Nut 32c weist Rastausnehmungen 84c auf, in die Lagernasen 82c in einem eingeschobenen Betriebszustand einrasten. In einem kraftlosen Zustand von Federelementen 80c ist ein größter Abstand von senkrecht zu einer Einschubrichtung 54c einander gegenüberliegenden Gleitflächen der Lagernasen 82c größer als ein zur Einschubrichtung 54c senkrechter größter Abstand eines Rastgrunds von den Rastausnehmungen 84c zweier senkrecht zur Einschubrichtung 54c einander gegenüberliegend angeordneter Nuten 32c. Die Nuten 32c üben somit auch im eingerasteten Zustand eine Kraft auf die Lagernasen 82c aus, sodass der Befestigungsrahmen 20c relativ zu der Induktionsladeeinheit 12c auch im eingerasteten Zustand spielfrei bleibt. Die Rastausnehmungen 84c sind in Einschubrichtung 54c beidseitig abgerundet, sodass die Rastverbindung lösbar ist, indem die Induktionsladeeinheit 12c relativ zu dem Befestigungsrahmen 20c mit einer Kraft entgegen der Einschubrichtung 54c beaufschlagt wird, die ausreichend ist, um die Lagernasen 82c aus den Rastausnehmungen 84c zu drängen. Bis auf Einschubschrägen mit einem Winkel von 45 ° gegenüber der Einschubrichtung 54c, die ein Einschieben erleichtern, und die Rastausnehmungen 84c weisen die Nuten 32c entlang der Einschubrichtung 54c ein gleichbleibendes Nutprofil auf.

Um zu einer Einschubebene senkrechte Kräfte aufzunehmen und die Induktionsladeeinheit relativ zu dem Befestigungsrahmen senkrecht zur Einschubebene zu positionieren, sind die Nutprofile der Nuten 32c und Gleitflächenprofile der Lagernasen 82c geeignet ausgebildet.

In den Figuren 8a, 8b und 8c sind drei weitere Nutprofile der Nut 32d, 32e, 32f und Gleitflächenprofile der Lagernasen 82d, 82e, 82f dargestellt. Das Nutprofil der Nut 32d weist eine zu einer Einschubebene parallele Flanke 86d auf. Eine weitere Flanke 88d bildet mit der Einschubebene einen Winkel von 60 ° (Figur 8a). Die weitere Flanke 56a stützt die als Federkraft ausgebildete Kraft mit einer Kraftkomponente senkrecht zur Flanke 88d ab und erzeugt so eine Anpresskraft, die die Lagernase 82d gegen die Flanke 86d der Nut 32d drückt. Die Position der Induktionsladeeinheit 12d relativ zum Befestigungsrahmen 20d wird so besonders präzise bezüglich der Einschubebene festgelegt. Die parallelen Flanken 86d bilden in diesem Fall die Einschubebene. Die Figuren 8b und 8c zeigen Varianten mit einer Nut 32e mit kreisförmigem Nutprofil und mit einer Nut 32f mit parabelförmigem Nutprofil sowie angepassten Gleitflächenprofilen der Lagernasen 82e und 82f. Die Nutprofile stellen gegenüber einer Einschubebene eine schwimmende Lagerung dar, die in eine Mittelstellung strebt, in der die Gleitflächen quer zur Einschubrichtung 54e, 54f einander gegenüberliegender Lagernasen 82e, 82f in den Nuten 32e, 82f den größten Abstand aufweisen. Beim kreisförmigen Nutprofil der Nut 32e weist die Lagernase 82e ein ebenfalls kreisförmiges Gleitflächenprofil auf, sodass sich eine vergleichsweise robuste Lagerung mit einer hohen Lagerreibung ergibt, die große Lagerkräfte aufnehmen kann. Das parabelförmige Nutprofil der Nut 32f ist mit einer spitz zulaufenden Lagernase 82f kombiniert, die ein mit einem kleinen Radius von weniger als 10% einer Nuthöhe abgerundetes Gleitflächenprofil aufweist. Die so mit nur einer kleinen Gleitfläche an der Nut 32e, 32f anliegende Lagernase 82e, 82f kann besonders in Einschubrichtung 54e, 54f leichtgängig sein und sich bezogen zur Einschubebene besonders präzise ausrichten.

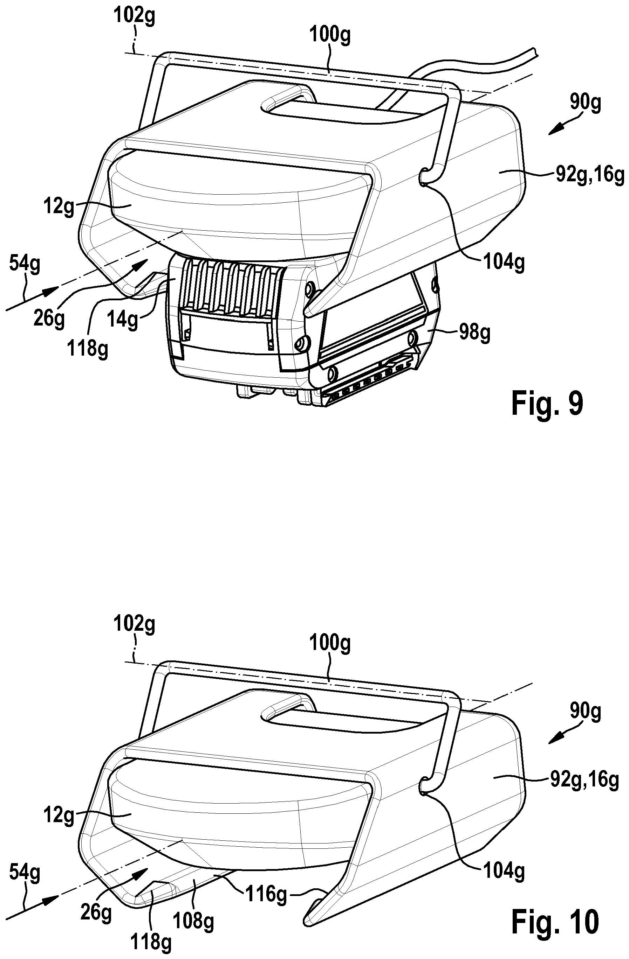

Die nachfolgenden Ausführungsbeispiele der Figuren 9 bis 22 zeigen mögliche Anwendungen eines als induktives Ladesystem ausgebildeten, erfindungsgemäßen Systems 90g mit zumindest einer erfindungsgemäßen Induktionsladeeinheit 12g und mit zumindest einem erfindungsgemäßen Induktionsakkumulator 14g.

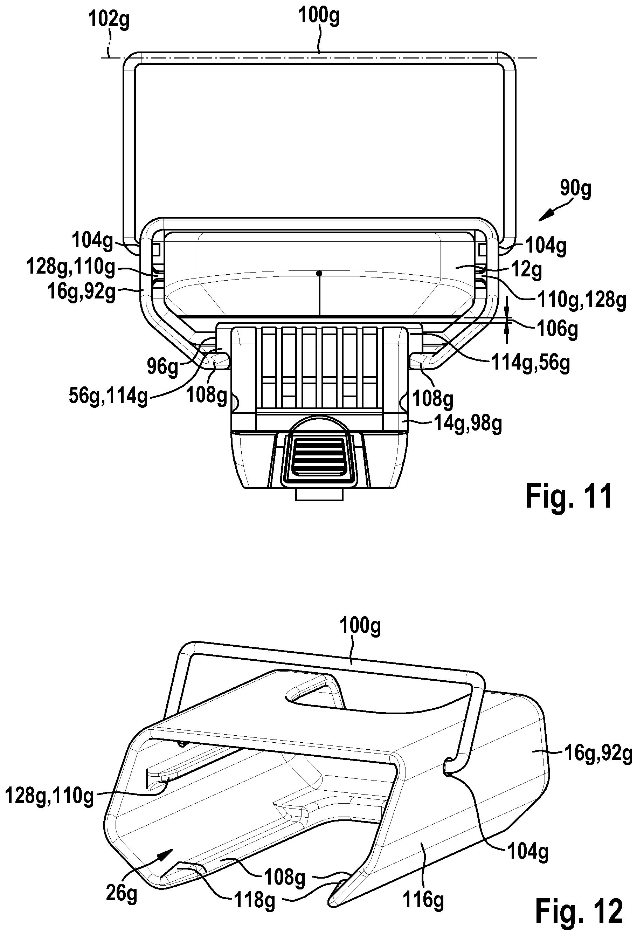

Die Figuren 9 bis 11 zeigen das System 90g mit einer Befestigungseinheit 16g, die einen aus einem Kunststoffmaterial gefertigten Systemhalter 92g umfasst, und mit der Induktionsladeeinheit 12g. Der Systemhalter 92g begrenzt einen Aufnahmebereich 26g, der zur Aufnahme der Induktionsladeeinheit 12g und einer Ladeschnittstelle 96g eines in den Figuren 9 und 11 als Induktionsakkumulator 14g ausgebildeten, aufzuladenden Geräts 98g vorgesehen ist. Der erfindungsgemäße Induktionsakkumulator 14g ist als Handwerkzeugmaschinenakkumulator ausgebildet.

Der Systemhalter 92g weist ein als Bügel 100g ausgebildetes Befestigungsmittel auf, das dazu vorgesehen ist, das System 90g in einem betriebsbereiten Zustand um eine Pendelachse 102g beweglich hängend zu lagern (Figur 12). Der Bügel 100g ist an zwei Lagerstellen 104g am Systemhalter 92g um die Pendelachse 102g beweglich gelagert und im Wesentlichen auf einer dem Aufnahmebereich 26g abgewandten Seite des Systemhalters 92g angeordnet.

Der Aufnahmebereich 26g weist Lagermittel 108g, 128g zur um einen Luftspalt 106g von etwa 3 mm beabstandeten Lagerung der erfindungsgemäßen Induktionsladeeinheit 12g und der Ladeschnittstelle 96g des aufzuladenden Geräts 98g auf. Zur Aufnahme der Induktionsladeeinheit 12g und der Ladeschnittstelle 96g werden diese in einer gemeinsamen Einschubrichtung 54g in den Aufnahmebereich 26g eingeschoben. Die Ladeschnittstelle 96g des als erfindungsgemäße Induktionsakkumulator 14g ausgebildeten Geräts 98g kann in zwei gegenüber einer zur Pendelachse 102g und zur Einschubrichtung 54g senkrecht stehenden Achse um 180 ° gedrehten Orientierungen in den Aufnahmebereich 26g eingeschoben werden.

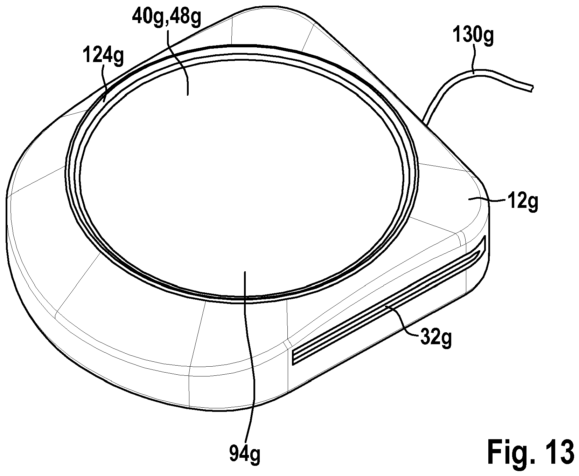

Gemäß Figur 13 weist die erfindungsgemäße Induktionsladeeinheit 12g eine Fläche auf, unter der eine hier nicht näher dargestellte Sendespule zu einer induktiven Energieübertragung angeordnet ist. Die Fläche ist als Vertiefung 38g ausgebildet. Eine Zuleitung 130g dient der Energieversorgung. An Seiten der Induktionsladeeinheit 12g sind von jeweils einer Nut 32g gebildete Lagerrillen angeordnet, die zu einer Lagerung der Induktionsladeeinheit 12g im Systemhalter 92g vorgesehen sind. Der Systemhalter 92g weist innerhalb des Aufnahmebereichs 26g zwei Lagerschienen 110g auf, die die Lagermittel 108g bilden. Die Induktionsladeeinheit 12g wird mit den als Nuten 32g gebildeten Lagerrillen auf die Lagerschienen 110g des Aufnahmebereichs 26g in der Einschubrichtung 54g eingeschoben und so im Aufnahmebereich 26g gelagert. Der Aufnahmebereich 26g umschließt die Induktionsladeeinheit 12g um eine zur Einschubrichtung 54g parallele Achse um mehr als 180 °, sodass die Induktionsladeeinheit 12g mit dem Systemhalter 92g eine kompakte Einheit bildet.

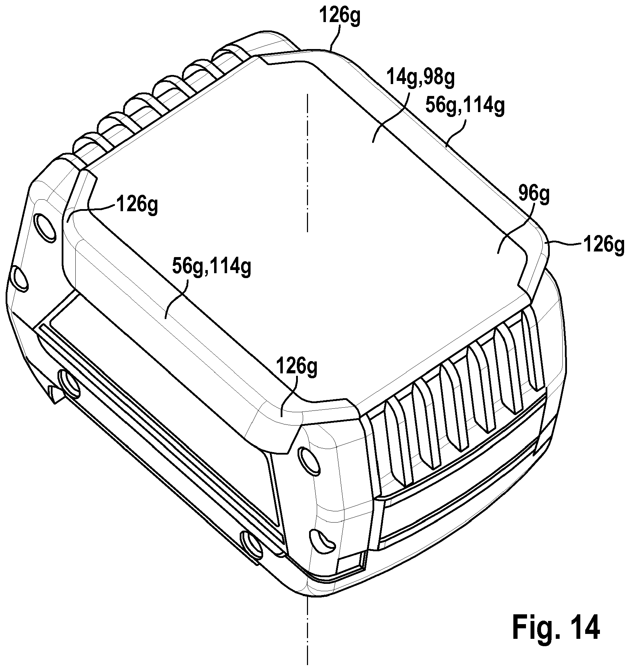

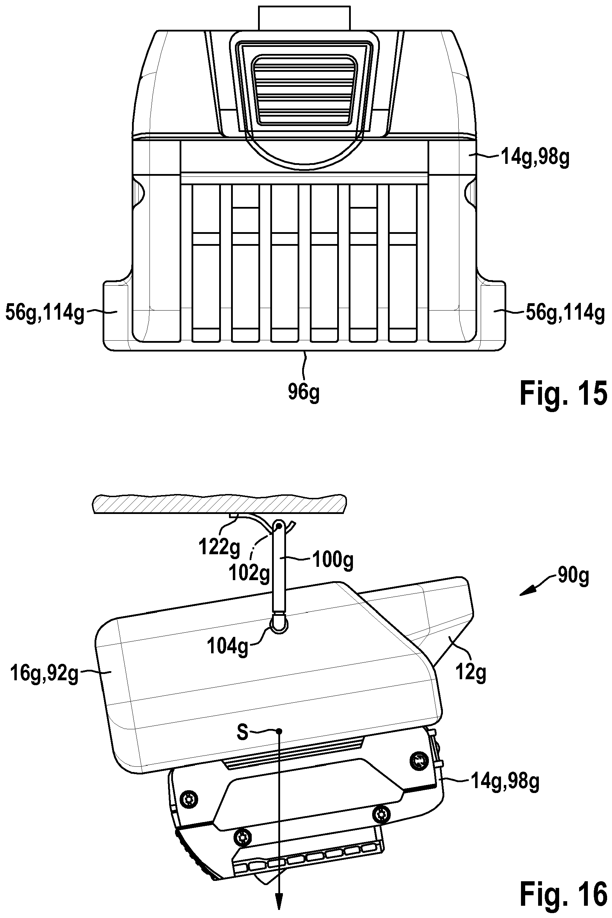

Die Figuren 14 und 15 zeigen die Ladeschnittstelle 96g am erfindungsgemäßen Induktionsakkumulator 14g. Die Ladeschnittstelle 96g kann geometrisch entsprechend alternativ auch an einer Handwerkzeugmaschine 112g mit einem integrierten Induktionsakkumulator 14g angeordnet sein. Die Ladeschnittstelle 96g weist eine Fläche auf, unter der eine hier nicht näher dargestellte Empfangsspule zu einer induktiven Energieübertragung angeordnet ist. Die Fläche ist als ein mit der Vertiefung 48 korrespondierendes Podest ausgebildet. Beidseitig der Fläche sind zwei als Aufnahmeschultern 114g ausgebildete Halteelemente 56g, die zu einer Lagerung der Ladeschnittstelle 96g im Systemhalter 92g vorgesehen sind. Die Aufnahmeschultern 114g sind zu einer Achse senkrecht zur Fläche und zu einem Zentrum der Empfangsspule symmetrisch angeordnet, sodass die Ladeschnittstelle 96g in zwei zu dieser Achse um 180° gedrehten Orientierungen in den Systemhalter 92g eingeschoben werden kann.

Der Systemhalter 92g weist zwei Flanken 116g auf, die in einem in den Systemhalter 92g eingeschobenen Zustand der Ladeschnittstelle 96g die Aufnahmeschultern 114g formschlüssig lagern und Lagermittel bilden. Die Flanken 116g werden an dem der Einschubrichtung 54g zugewandten Ende von Absätzen 118g begrenzt, die die in den Aufnahmebereich 26g eingeschobene Ladeschnittstelle 96g in einer Ladeposition fixieren und Sicherungsmittel bilden (Figur 10). Um die Ladeschnittstelle 96g zu entnehmen, wird diese in Richtung der Induktionsladeeinheit 12g über die Absätze 118g angehoben und anschließend entgegen der Einschubrichtung 54g entnommen. Eine Höhe senkrecht zur Einschubrichtung 54g der Absätze 118g ist geringer als das Maß des Luftspalts 106g, sodass die Aufnahmeschultern 114g der Ladeschnittstelle 96g über die Absätze 118g angehoben werden können, ohne mit der Induktionsladeeinheit 12g zu kollidieren. Der Induktionsakkumulator 14g weist auf der der Ladeschnittstelle 96g abgewandten Seite eine Geräteschnittstelle 120g auf, mit der er mit einer Handwerkzeugmaschine 112g verbunden werden kann. Die Geräteschnittstelle 120g weist eine an die Handwerkzeugmaschine 112g angepasste Ausbildung auf und ist unabhängig von der Ausgestaltung der Ladeschnittstelle 96g. Mit dem System 90g können verschiedene als Handwerkzeugmaschinenakkus ausgebildete Induktionsakkumulatoren 14g mit abweichender Geräteschnittstelle 120g genutzt werden, bei denen die Ladeschnittstelle 96g der mit dem System 90g kompatiblen Ausbildung entspricht.

Figur 16 zeigt das erfindungsgemäße System 90g mit eingeschobenem Induktionsakkumulator 14g bei einer am Bügel 100g hängenden Lagerung. An einem festen Körper, wie zum Beispiel einem Regal, ist ein Haken 122g angebracht, in den der Bügel 100g eingehängt werden kann. Das System 90g mit dem Induktionsakkumulator 14g richtet sich entsprechend einer an einem Schwerpunkt S des Systems 90g mit dem Induktionsakkumulator 14g einwirkenden Gewichtskraft so aus, dass die Pendelachse 102g annähernd momentfrei ist.

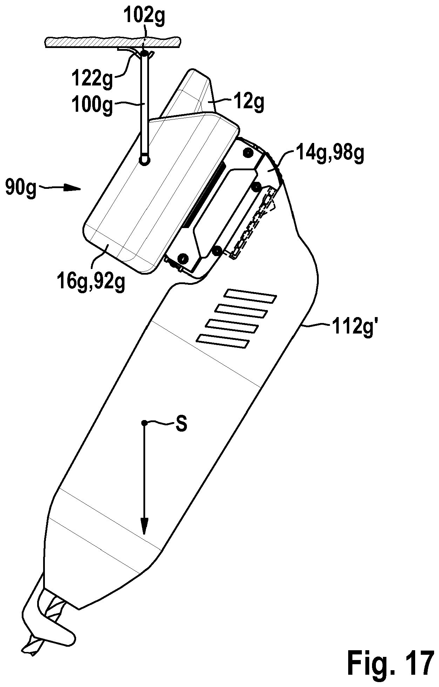

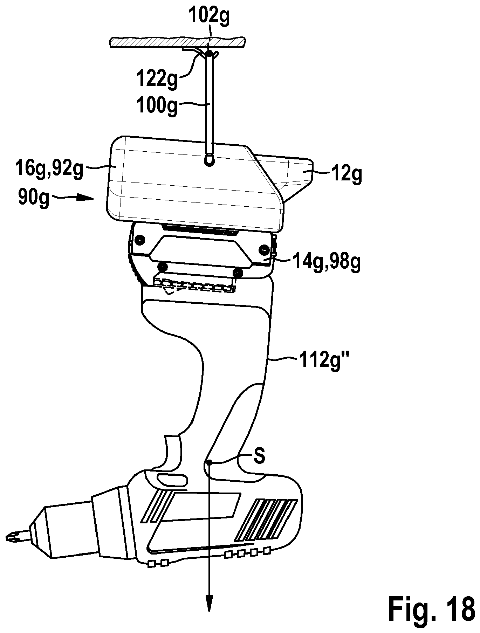

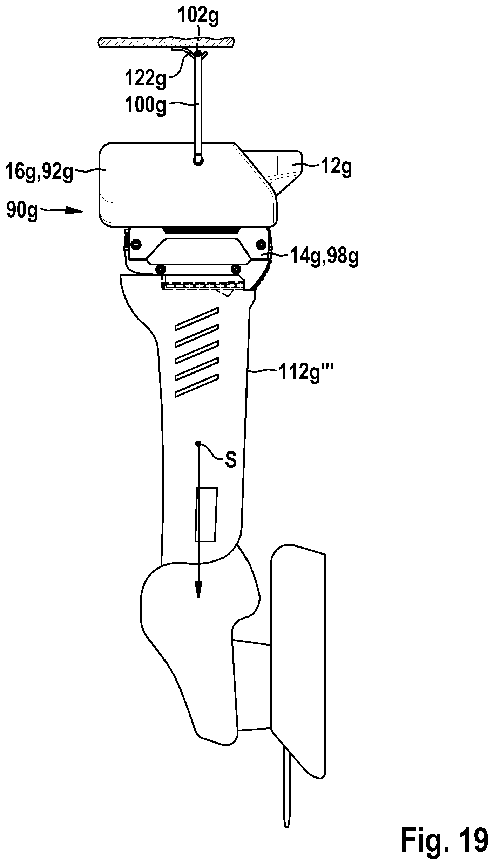

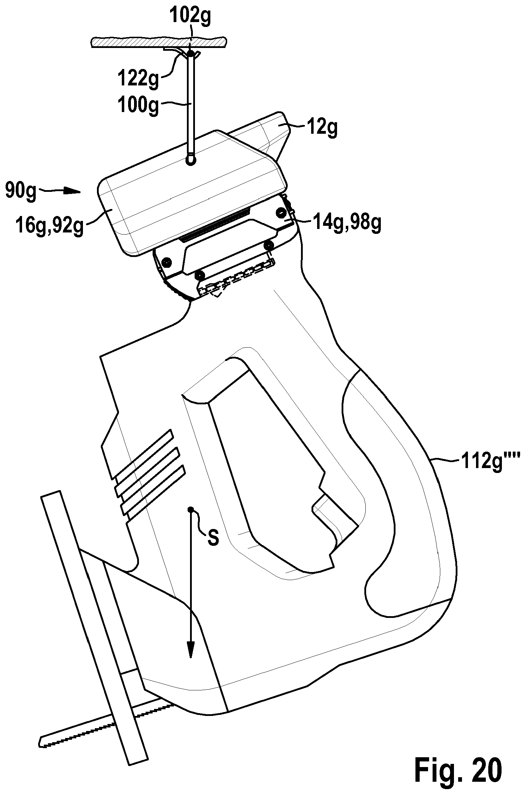

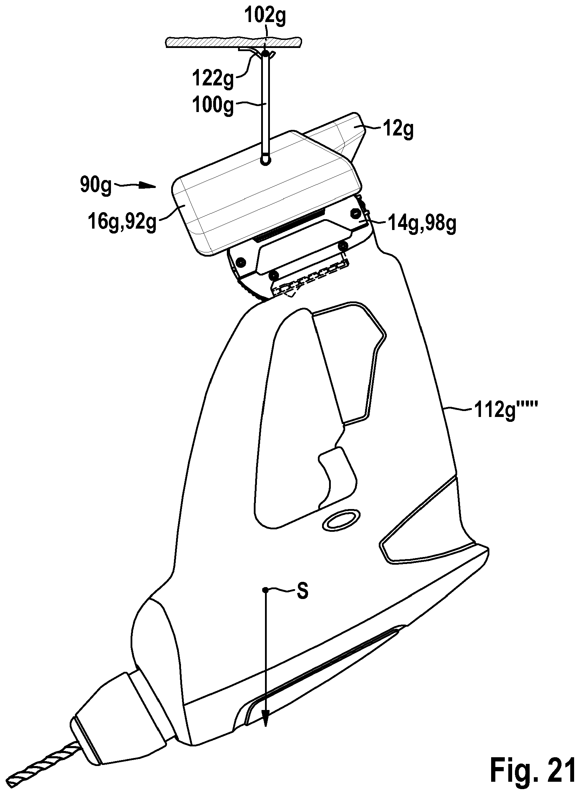

Die Figuren 17 bis 21 zeigen das erfindungsgemäße System 90g mit einer Auswahl von verschiedenen möglichen Handwerkzeugmaschinen 112g', 112g", 112g'", 112g"", 112g'"" mit abweichender Gestalt, Größe, Masse und Schwerpunkt S. Eine Handwerkzeugmaschine 112g' in Figur 17 ist als Handfräse ausgebildet. Eine Handwerkzeugmaschine 112g" in Figur 18 ist als Bohrschrauber ausgebildet. Eine Handwerkzeugmaschine 112g''' in Figur 19 ist als Winkelschleifer ausgebildet. Eine Handwerkzeugmaschine 112g"" in Figur 20 ist als Stichsäge ausgebildet. Eine Handwerkzeugmaschine 112g'"" in Figur 21 ist als Bohrhammer ausgebildet. Die Handwerkzeugmaschinen 112g richten sich gemeinsam mit dem System 90g jeweils entsprechend ihrem Schwerpunkt S und der Gewichtskraft so um die Pendelachse 102g aus, dass diese weitgehend momentfrei bleibt. Das System 90g kann so unterschiedliche Handwerkzeugmaschinen 112g aufnehmen und hängend laden und lagern.

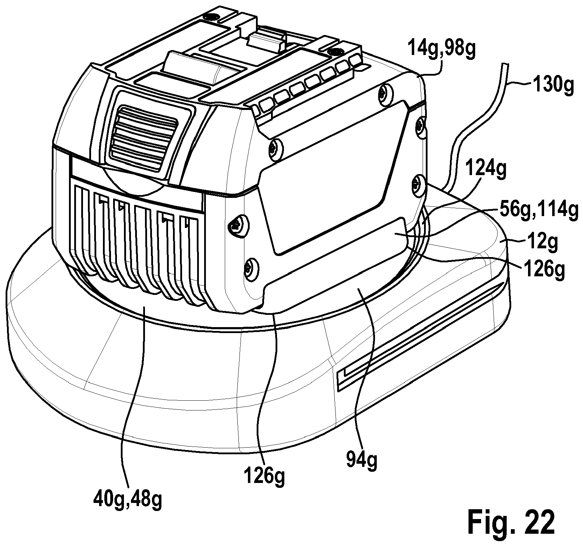

Figur 22 zeigt eine alternative Nutzungsmöglichkeit der erfindungsgemäßen Induktionsladeeinheit 12g mit dem erfindungsgemäßen Induktionsakkumulator 14g ohne Verwendung des Systemhalters 92g. Der Induktionsakkumulator 14g kann mit der Fläche der Ladeschnittstelle 96g direkt auf die Fläche der Induktionsladeeinheit 12g aufgelegt werden und so direkt geladen werden. Zur Positionierung weist die Induktionsladeeinheit 12g um die Fläche einen kreisförmigen, konzentrisch mit der Sendespule angeordneten Rand 124g auf. Die Fläche und der Rand 124g bilden ein Positionierelement 40g. Die Aufnahmeschultern 114g des Induktionsakkumulators 14g werden von Kreissegmenten 126g eines konzentrisch zur Empfangsspule des Induktionsakkumulators 14g angeordneten Kreises begrenzt, wobei der Durchmesser der Kreissegmente 126g auf den Durchmesser des Rands 124g abgestimmt ist. Die Kreissegmente 126g dienen so bei auf die Induktionsladeeinheit 12g aufgelegtem Induktionsakkumulator 14g zur konzentrischen Positionierung der Sendespule der Induktionsladeeinheit 12g mit der Empfangsspule des Induktionsakkumulators 14g, wobei zwischen den Kreissegmenten 126g und dem Rand 124g eine Toleranz in einem Umfang zulässig ist, innerhalb der ein Wirkungsgrad der induktiven Energieübertragung nur wenig beeinflusst wird. Die Ladespule und Empfangsspule sind symmetrisch, sodass eine Orientierung um die Symmetrieachsen der Ladespule und Empfangsspule ohne Einfluss auf den Ladevorgang ist. Auf die gleiche Art können auch Handwerkzeugmaschinen 112g direkt mit der Induktionsladeeinheit 12g ohne Nutzung des Systemhalters 92g geladen werden, sofern ihre Geometrie und ihr Schwerpunkt ein sicheres Abstellen mit ihrer Ladeschnittstelle 96g auf der Induktionsladeeinheit 12g zulassen.

## Patentansprüche

1. Induktionsladeeinheit, insbesondere Handwerkzeuginduktionsladeeinheit, die dazu vorgesehen ist, in einem mit einem Induktionsakkumulator (14) gekoppelten Zustand eine Energie zu übertragen, mit zumindest einer Ladespule und mit einem Gehäuse (30), das zumindest einen Aufnahmebereich (36) zur Aufnahme des Induktionsakkumulators (14) in einem gekoppelten Zustand umfasst, wobei der zumindest eine Aufnahmebereich (36) zumindest eine Vertiefung (38, 48) aufweist, **dadurch gekennzeichnet, dass** die zumindest eine Vertiefung (38) zumindest teilweise ein Positionierelement (40) zur Positionierung des Induktionsakkumulators (14) bildet, welches als ein Absatz mit einer Absatzhöhe aus einem Wertebereich von 0,5 mm bis 3 mm aufweisend eine runde Außenkontur für die Aufnahme des Induktionsakkumulators (14) ausgebildet ist.

2. Induktionsladeeinheit nach Anspruch 1, **dadurch gekennzeichnet, dass** der Aufnahmebereich (36) zumindest eine weitere Vertiefung (48) aufweist, welche zumindest teilweise zumindest ein Schmutzabführelement (42) bildet.

3. Induktionsladeeinheit nach Anspruch 2, **dadurch gekennzeichnet, dass** der Aufnahmebereich (36) mehrere als Schmutzabführelemente (42) ausgebildete Vertiefungen (48) aufweist.

4. Induktionsladeeinheit nach Anspruch 2 oder 3, **dadurch gekennzeichnet, dass** das zumindest eine Schmutzabführelement (42) zumindest teilweise rinnenförmig ausgebildet ist.

5. Induktionsakkumulator, insbesondere Handwerkzeuginduktionsakkumulator, mit zumindest einer Ladespule und mit einem Gehäuse (44), welches zumindest ein Positionierelement (46) zur Kopplung des Induktionsakkumulators (14) mit einem Aufnahmebereich (36) einer Induktionsladeeinheit (12) in einem gekoppelten Zustand aufweist, **dadurch gekennzeichnet, dass** das Positionierelement (46) eine Ladeschnittstelle (96) bildet und als Podest ausgebildet ist, welches sich über eine Außenfläche des angrenzenden Gehäuses (44a) des Induktionsakkumulators (14) derart erhebt, dass das Positionierelement (46) eine Absatzhöhe aus einem Wertebereich von 0,5 mm bis 3 mm aufweist.

6. Induktionsakkumulator nach Anspruch 5, **dadurch gekennzeichnet, dass** die Außenkontur des Positionierelements (46) quadratisch mit abgerundeten Ecken ausgebildet ist.

7. System mit zumindest einer Induktionsladeeinheit (12) nach einem der Ansprüche 1 bis 4 und mit zumindest einem Induktionsakkumulator (14) nach einem der Ansprüche 5 oder 6, der mittels der Induktionsladeeinheit (12) induktiv aufladbar ausgebildet ist.

8. System nach Anspruch 7, **dadurch gekennzeichnet, dass** das Positionierelement (40) der Induktionsladeeinheit (12) und das Positionierelement (46) des Induktionsakkumulators (14) korrespondierend ausgebildet sind.

9. System nach einem der Ansprüche 7 oder 8, **dadurch gekennzeichnet, dass** ein Durchmesser des Positionierelements (40) der Induktionsladeeinheit (12) zumindest im Wesentlichen einer Diagonallänge des Positionierelements (46) des Induktionsakkumulators (14) entspricht.

## Claims

1. Induction charging unit, in particular handheld tool induction charging unit, which is provided to transmit energy in a state in which it is coupled to an induction accumulator (14), having at least one charging coil and having a housing (30), which in a coupled state comprises at least one receiving region (36) for receiving the induction accumulator (14), wherein the at least one receiving region (36) has at least one depression (38, 48), **characterized in that** the at least one depression (38) at least partly forms a positioning element (40) for positioning the induction accumulator (14), which positioning element is formed as a shoulder with a shoulder height from a range of values of 0.5 mm to 3 mm having a round outer contour for receiving the induction accumulator (14).

2. Induction charging unit according to Claim 1, **characterized in that** the receiving region (36) has at least one further depression (48), which at least partly forms at least one dirt discharging element (42).

3. Induction charging unit according to Claim 2, **characterized in that** the receiving region (36) has a plurality of depressions (48) formed as dirt discharging elements (42).

4. Induction charging unit according to Claim 2 or 3, **characterized in that** the at least one dirt discharging element (42) is at least partly formed in a trough-like manner.

5. Induction accumulator, in particular handheld tool induction accumulator, having at least one charging coil and having a housing (44), which in a coupled state has at least one positioning element (46) for coupling the induction accumulator (14) to a receiving region (36) of an induction charging unit (12), **characterized in that** the positioning element (46) forms a charging interface (96) and is formed as a platform, which rises above an outer surface of the adjoining housing (44a) of the induction accumulator (14) in such a way that the positioning element (46) has a shoulder height from a range of values of 0.5 mm to 3 mm.

6. Induction accumulator according to Claim 5, **characterized in that** the outer contour of the positioning element (46) is formed as a cuboid with rounded corners.

7. System having at least one induction charging unit (12) according to one of Claims 1 to 4 and having at least one induction accumulator (14) according to either of Claims 5 and 6, which is formed so as to be able to be charged inductively by means of the induction charging unit (12).

8. System according to Claim 7, **characterized in that** the positioning element (40) of the induction charging unit (12) and the positioning element (46) of the induction accumulator (14) are of corresponding form.

9. System according to either of Claims 7 and 8, **characterized in that** a diameter of the positioning element (40) of the induction charging unit (12) at least substantially corresponds to a diagonal length of the positioning element (46) of the induction accumulator (14) .

## Revendications

1. Unité de charge par induction, notamment unité de charge par induction d'outil manuel, qui est conçue pour, dans un état couplé avec un accumulateur à induction (14), transmettre une énergie, comprenant au moins une capsule de charge et comprenant un boîtier (30), lequel comporte au moins une zone d'accueil (36) destinée à accueillir l'accumulateur à induction (14) dans un état couplé, l'au moins une zone d'accueil (36) possédant au moins une empreinte (38, 48), **caractérisée en ce que** l'au moins une empreinte (38) forme au moins partiellement un élément de positionnement (40) servant au positionnement de l'accumulateur à induction (14), lequel est configuré sous la forme d'un talon ayant une hauteur de talon dans une plage de valeurs de 0,5 mm à 3 mm possédant un contour extérieur rond pour l'accueil de l'accumulateur à induction (14).

2. Unité de charge par induction selon la revendication 1, **caractérisée en ce que** la zone d'accueil (36) possède au moins une empreinte supplémentaire (48), laquelle forme au moins partiellement au moins un élément d'évacuation de la saleté (42).

3. Unité de charge par induction selon la revendication 2, **caractérisée en ce que** la zone d'accueil (36) possède plusieurs empreintes (48) réalisées sous la forme d'éléments d'évacuation de la saleté (42).

4. Unité de charge par induction selon la revendication 2 ou 3, **caractérisée en ce que** l'au moins un élément d'évacuation de la saleté (42) est au moins partiellement réalisé sous la forme d'une rigole.

5. Accumulateur à induction, notamment accumulateur à induction d'outil manuel, comprenant au moins une bobine de charge et comprenant un boîtier (44), lequel possède au moins un élément de positionnement (46) destiné à coupler l'accumulateur à induction (14) avec une zone d'accueil (36) d'une unité de charge par induction (12) dans un état couplé, **caractérisé en ce que** l'élément de positionnement (46) forme une interface de charge (96) et est réalisé sous la forme d'un socle qui s'élève au-dessus d'une surface extérieure du boîtier (44a) adjacent de l'accumulateur à induction (14) de telle sorte que l'élément de positionnement (46) possède une hauteur de talon dans une plage de valeurs de 0,5 mm à 3 mm.

6. Accumulateur à induction selon la revendication 5, **caractérisé en ce que** le contour extérieur de l'élément de positionnement (46) est de configuration carrée avec des coins arrondis.

7. Système comprenant au moins une unité de charge par induction (12) selon l'une des revendications 1 à 4 et comprenant au moins un accumulateur à induction (14) selon l'une des revendications 5 et 6, lequel est configuré pour pouvoir être chargé par induction au moyen de l'unité de charge par induction (12).

8. Système selon la revendication 7, **caractérisé en ce que** l'élément de positionnement (40) de l'unité de charge par induction (12) et l'élément de positionnement (46) de l'accumulateur à induction (14) sont configurés en correspondance.

9. Système selon l'une des revendications 7 et 8, **caractérisé en ce qu'**un diamètre de l'élément de positionnement (40) de l'unité de charge par induction (12) correspond au moins sensiblement à une longueur de diagonale de l'élément de positionnement (46) de l'accumulateur à induction (14).
